# EUROPEAN PATENT APPLICATION

(11) **EP 4 516 949 A1**
(43) Date of publication of application: **05.03.2025**
(21) Application number: 23937760.9
(22) Date of filing: 03.07.2023
(51) Int. Cl.: C22B 23/00

(54) **GREEN METHOD FOR PRODUCING NICKEL-COBALT-MANGANESE NEW ENERGY RAW MATERIAL FROM LATERITE NICKEL ORE BASED ON HYDROMETALLURGY**

(71) Applicant: PT ESG New Energy Material, Jakarta 12950 (ID); PT QMB New Energy Materials, Jakarta 12950 (ID); GEM Co., Ltd., Bao'an Center Area, Bao'an, Shenzhen Guangdong 518101 (CN); PT Gem Indonesia New Energy Materials, Jakarta 12950 (ID)
(72) Inventor: XU, Kaihua, Shenzhen, Guangdong 518101 (CN); JIN, Guoquan, Jakarta 12950 (ID); PENG, Yaguang, Jakarta 12950 (ID); ZHANG, Kun, Shenzhen, Guangdong 518101 (CN); LIU, Wenze, Jakarta 12950 (ID); XU, Pengyun, Jakarta 12950 (ID); WEI, Qiong, Shenzhen, Guangdong 518101 (CN); LIU, Gang, Shenzhen, Guangdong 518101 (CN); CUI, Tao, Jakarta 12950 (ID); GAO, Baoyu, Jakarta 12950 (ID); WANG, Yi, Jakarta 12950 (ID); LIU,Wei, Jakarta 12950 (ID); ZHANG, Song, Jakarta 12950 (ID); ZHANG, Wenjie, Jakarta 12950 (ID); WANG, Yaning, Jakarta 12950 (ID); YANG, Jian, Jakarta 12950 (ID)
(74) Representative: Ipside
(86) International application number: PCT/CN2023/105482
(87) International publication number: WO 2025/007234

(57) **Abstract**

Disclosed is a green method for hydrometallurgical production of a nickel-cobalt-manganese new energy raw material from laterite nickel ore. This method belongs to green technology and green process and mainly comprises such technologies and processes as ore blending, ore washing, beneficiation, pressure or oxygen pressure leaching, cyclic leaching and neutralization, counter-current washing, multistage iron-aluminum-chromium removal, multistage nickel-cobalt-manganese hydroxide synthesis, ion extraction, preparation of mixed solution of nickel-cobalt-manganese salt or independent solution of nickel, cobalt, and manganese salts, preparation of crystal of mixed nickel-cobalt-manganese salt or independent crystals of nickel, cobalt, and manganese salts, and preparation of a ternary precursor so as to achieve simultaneous and efficient extraction of nickel-cobalt-manganese, and effectively recover valuable metal elements such as chromium, iron, copper, zinc, and scandium, producing a nickel-cobalt-manganese raw material meeting the requirements of a high-nickel ternary battery, and manufacturing a ternary precursor material (also referred to as a ternary "key" or a ternary "core") directly used in the manufacture of the ternary battery, and promote the transformation of laterite nickel ore from traditional smelting to the new energy raw material.

## Description

### FIELD OF THE DISCLOSURE

The disclosure relates to the technical field of hydrometallurgy and new energy materials, particularly a green method for the hydrometallurgical production of a nickel-cobalt-manganese new energy raw material from laterite nickel ore.

### BACKGROUND

With the development of batteries and energy storage technology, the types of batteries are also increasing. Batteries made of various materials continue to extend their market reach by virtue of their advantages. Among them, lithium iron phosphate batteries and ternary lithium batteries are the two mainstream types of power lithium batteries in the field of new energy vehicles. As two technical routes of power lithium batteries, lithium iron phosphate batteries and ternary lithium batteries have their own advantages and disadvantages in terms of performance. Compared with the lithium iron phosphate battery, the ternary lithium battery has the advantages of high energy density and good low-temperature performance, which is the power choice of long endurance mileage and high-grade automobiles and shows good market prospects.

Ternary lithium batteries are mainly composed of three elements nickel, cobalt, and manganese as the name implies. The upstream of the industrial chain includes nickel, cobalt, and manganese mineral resources, nickel-cobalt-manganese ternary raw materials, and ternary precursors (also referred to as ternary "key" and ternary "core"). The midstream includes ternary lithium cathode materials, separators, electrolytes, and anode materials. The downstream includes ternary cells, BMS, and PACK. The nickel, cobalt, and manganese minerals and raw materials become the key factors restricting the cost and development of ternary new energy, especially the nickel resources and nickel raw materials are essential for high-capacity ternary batteries. High nickel is equal to high capacity and long-term endurance. The ultra-high nickel ternary material containing more than 55% nickel can support more than 800 kilometers of mileage. With the development of global electromotion, nickel has become a global scarce resource.

The laterite nickel ore is distributed in tropical countries within 22 degrees north and south of the equator, concentrated in tropical subtropical regions around the Pacific Ocean, mainly including Cuba and Brazil in the Americas; Indonesia and the Philippines in Southeast Asia; Australia, New Caledonia, Papua New Guinea, and other countries in Oceania. 70% of China's nickel ore reserves are concentrated in Gansu, followed by seven provinces including Xinjiang, Yunnan, Jilin, Sichuan, Shaanxi, Qinghai, and Hubei, with a total reserve of 27% of the country's total nickel resources. Laterite nickel ore contains three elements of nickel, cobalt, and manganese simultaneously. Especially the low-grade laterite nickel ore containing less than 1.3% of nickel, which contains nickel, cobalt, and manganese in the ratio of 10: (0.6-1.5): (1.0-5.0), which is the perfect formula for high-nickel, low-cobalt ternary materials, is a gift of nature. However, for a long time, the existing smelting technology only pays attention to the extraction of nickel or nickel-cobalt and does not consider the simultaneous extraction of nickel-cobalt-manganese, resulting in a great waste of resources. For example: current RKEF and developing oxygen-enriched side-blown technology can only extract nickel with loss of cobalt and manganese and high carbon emissions. For example, the patent CN108913883A only focuses on the extraction of nickel and part of cobalt, ignores the utilization of manganese, ignores green design and clean production, resulting in a waste of the current laterite nickel ore resources, and fails to meet the global trend of green development and dual-carbon economy. The disclosure overcomes the defects of the existing technology and process, which lies in the green technology and process for the simultaneous extraction of nickel, cobalt, and manganese from low-grade laterite nickel ore, which not only realizes the simultaneous and efficient extraction of nickel, cobalt, and manganese but also adopts energy-saving and emission-reduction green technology and clean production technology. It can carry out the effective recycling and safe disposal of waste water, waste residue, and waste gas, with the function of energy-saving and carbon reduction, and implement the integrated recovery of nickel, cobalt, and manganese at the largest extent, which can effectively resolve the contradiction of new energy demand for strategic scarce resources, nickel, cobalt, and manganese, fully in line with the global trend of green development and dual-carbon economy.

### SUMMARY

The object of the disclosure is to provide a green method for the hydrometallurgical production of a new energy source material of nickel-cobalt-manganese from a laterite nickel ore, which is used to solve the problems in the prior art such as poor removal of iron, aluminum, and other impurity metal elements, low quality of simultaneous extraction of nickel, cobalt and manganese products, difficult to be used directly for the preparation of ternary precursors, and lack of effective comprehensive utilization of chromium, manganese, copper, zinc, scandium, and other metal resources in the laterite nickel ore.

In order to solve the above technical problem, the solution provided by the disclosure is a green method for the hydrometallurgical production of a nickel-cobalt-manganese new energy raw material from laterite nickel ore including the following steps:
(1) subjecting a laterite nickel ore raw material to a pre-treatment procedure of ore blending, ore washing, beneficiation, grinding, and thickening to obtain a chromite and a laterite nickel ore pulp; wherein the chromite is obtained by sorting in the beneficiation treatment, and the content ratio of nickel-cobalt-manganese in the laterite nickel ore pulp is adapted to the content ratio of nickel-cobalt-manganese in a nickel-cobalt-manganese ternary precursor;
(2) mixing the laterite nickel ore pulp with a reducing agent and a leaching promoter and then performing pressure leaching or oxygen pressure leaching to obtain a mixed pulp composed of leaching solution containing nickel, cobalt, and manganese and a leaching residue containing iron, aluminum, and silicon;
(3) subjecting the mixed pulp composed of the leaching solution containing nickel, cobalt, and manganese and the leaching residue containing iron, aluminum, and silicon to cyclic leaching and multistage neutralization successively to obtain a neutralized pulp;
(4) subjecting the neutralized pulp obtained by cyclic leaching and multistage neutralization treatment to dilution, multistage counter-current washing and tailing neutralization, and recovering iron metal from the obtained tailings by means of reduction roasting-magnetic separation;
(5) subjecting an end-stage liquid phase after the multistage counter-current washing to multistage iron-aluminum-chromium removal, thickening, and separation under conditions of adding a neutralizer and a precipitation promoter; wherein the multistage iron-aluminum-chromium removal is composed of one-stage iron-aluminum-chromium removal, two- and more-stage iron-aluminum-chromium removal; a liquid phase after a former-stage iron-aluminum-chromium removal is subjected to a latter-stage iron-aluminum-chromium removal treatment, and a residue phase after the one-stage iron-aluminum-chromium removal is returned and subjected to multistage counter-current washing again, and the residue phase after the two- and more-stage iron-aluminum-chromium removal is reused and subjected to cyclic leaching and multistage neutralization treatment again;
(6) subjecting a tail-stage liquid phase after the multistage iron-aluminum-chromium removal to multistage nickel-cobalt-manganese synthesis, and subjecting the obtained mixed nickel-cobalt-manganese hydroxide to acid dissolution and liquid phase extraction to obtain a purified liquid, or subjecting the tail-stage liquid phase after the multistage iron-aluminum-chromium removal to liquid phase extraction directly to obtain a purified liquid, wherein the purified liquid is a solution composed of any one or more of a nickel-cobalt-manganese mixed salt, a nickel salt, a cobalt salt, and a manganese salt; and concentrating the purified liquid by evaporation to obtain purified crystals, wherein the purified crystals are crystals composed of any one or more of a nickel-cobalt-manganese mixed salt, a nickel salt, a cobalt salt, and a manganese salt, and the liquid phase extraction comprises liquid phase co-extraction and liquid phase selective extraction;
(7) taking the nickel-cobalt-manganese mixed salt solution as a mother liquor, or taking aqueous solution of the nickel-cobalt-manganese mixed salt crystal as a mother liquor, according to the content ratio of nickel-cobalt-manganese in the nickel-cobalt-manganese ternary precursor, adding the solutions or crystals of the nickel salt, cobalt salt, and manganese salt into the mother liquor, formulating the content ratio of nickel-cobalt-manganese in the mother liquor, and performing a controlled precipitation reaction with a precipitant and a complexing agent under a protective atmosphere to obtain the nickel-cobalt-manganese ternary precursor;

or according to the nickel-cobalt-manganese content ratio in the nickel-cobalt-manganese ternary precursor, mixing and formulating the solutions of the nickel salt, cobalt salt, and manganese salt or aqueous solutions of the nickel salt, cobalt salt, and manganese salt crystals, so that the nickel-cobalt-manganese content ratio in the formulated mixed solution matches the nickel-cobalt-manganese content ratio in the nickel-cobalt-manganese ternary precursor, and performing a controlled precipitation reaction with a precipitant and a complexing agent under a protective atmosphere to obtain the nickel-cobalt-manganese ternary precursor;
wherein the multistage nickel-cobalt-manganese synthesis is composed of one-stage nickel-cobalt-manganese synthesis, and two- and more-stage nickel-cobalt-manganese synthesis, and a liquid phase after a former-stage nickel-cobalt-manganese synthesis is subjected to a latter-stage nickel-cobalt-manganese synthesis; the tail-stage liquid phase of the multistage iron-aluminum-chromium removal is subjected to one-stage nickel-cobalt-manganese synthesis treatment; the mixed nickel-cobalt-manganese hydroxide is obtained after the one-stage nickel-cobalt-manganese synthesis; and the mixed nickel-cobalt-manganese hydroxide synthesized in the tail-stage of the multistage nickel-cobalt-manganese synthesis is returned and subjected to cyclic leaching and multistage neutralization treatment again.

Advantageous effects of the disclosure are: unlike the prior art, the disclosure provides a green method for hydrometallurgical production of a nickel-cobalt-manganese new energy raw material from laterite nickel ore. This method belongs to green technology and green process and mainly comprises such technologies and processes as ore blending, ore washing, beneficiation, pressure or oxygen pressure leaching, cyclic leaching and neutralization, counter-current washing, multistage iron-aluminum-chromium removals, multistage nickel-cobalt-manganese hydroxide synthesis, ion extraction, preparation of mixed solution of nickel-cobalt-manganese salt or independent solution of nickel-cobalt-manganese salt, preparation of crystal of mixed nickel-cobalt-manganese salt or independent crystals of nickel, cobalt, and manganese salts, preparation of a ternary precursor, and comprehensive treatment of waste water, waste gas, and waste slag so as to achieve simultaneous and efficient extraction of nickel-cobalt-manganese, and effectively recover valuable metal elements such as chromium, iron, copper, zinc, and scandium, producing a nickel-cobalt-manganese raw material meeting the requirements of a high-nickel ternary battery, and manufacturing a ternary precursor material (also referred to as a ternary "key" or a ternary "core") directly used in the manufacture of the ternary battery, so as to realize energy-saving, pollution-reducing and carbon-reducing, and promote the green transformation of laterite nickel ore from traditional smelting to the new energy raw material.

### BRIEF DESCRIPTION OF THE DRAWINGS

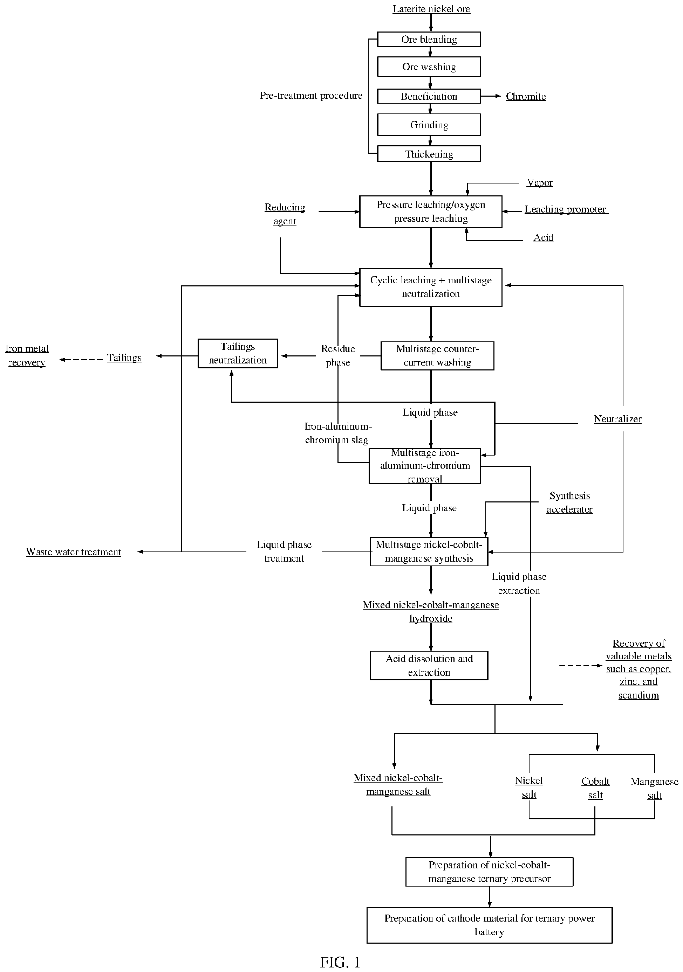

FIG. 1 is a flowchart of a green method for hydrometallurgical production of a nickel-cobalt-manganese new energy raw material from laterite nickel ore in an embodiment of the disclosure.

### DETAILED DESCRIPTION OF PREFERRED EMBODIMENTS

The technical solutions in the embodiments of the disclosure will be described clearly and completely in conjunction with the embodiments of the disclosure. Obviously, the described embodiments are only a part of the embodiments of the disclosure, rather than all the embodiments. Based on the embodiments of the disclosure, all other embodiments obtained by a person of ordinary skill in the art without inventive effort fall within the scope of the disclosure.

Referring to FIG. 1, which is a flow diagram of a green method for the hydrometallurgical production of a nickel-cobalt-manganese new energy raw material from laterite nickel ore according to the disclosure. A green method for the hydrometallurgical production of a nickel-cobalt-manganese new energy raw material from laterite nickel ore of the disclosure includes the following steps:
(1) Subjecting a laterite nickel ore raw material to a pre-treatment procedure of ore blending, ore washing, beneficiation, grinding and thickening to obtain a chromite and a laterite nickel ore pulp. In this step, the pre-treatment procedure comprises ore blending, ore washing, beneficiation, grinding, and thickening, and the content ratio of nickel-cobalt-manganese in the laterite nickel ore pulp is basically adapted to the content ratio of nickel-cobalt-manganese in the nickel-cobalt-manganese ternary precursor through the ore blending step. The beneficiation steps includes specifically gravity separation and magnetic separation performed sequentially, wherein prior to the gravity separation, the laterite nickel ore raw material can be classified into coarse and fine grades. Then, multi-stage gravity separation steps can be set up. The finer particles can be collected to form laterite nickel ore pulp, and coarser particles can be subjected to magnetic separation to obtain chromite, achieving the recovery of chromium metal resources. Here, gravity separation can be gravity separation methods such as spiral chute, shaking table, etc. and the classification of specific gravity separation and the conditions for the magnetic separation can be adaptively set according to actual situations, which are not limited herein. In the present embodiment, the raw material of the laterite nickel ore is a mixture of any one or more of an ultra-low-grade laterite nickel ore, a low-grade laterite nickel ore, and a medium-high-grade laterite nickel ore. The nickel content of the ultra-low-grade laterite nickel ore is less than 0.8%, the nickel content of the low-grade laterite nickel ore is 0.8-1.5%, and the nickel content of the medium-high-grade laterite nickel ore is greater than 1.5%. The ore pulp concentration of laterite nickel ore is 36-43%, and the ore pulp productivity ratio is 160-200 m³/ton metal nickel. Chromite contains more than 30% Cr and less than 40% Fe.
(2) Mixing the laterite nickel ore pulp with a reducing agent and a leaching promoter and then performing pressure leaching or oxygen pressure leaching to obtain a mixed pulp composed of leaching solution containing nickel, cobalt, and manganese and a leaching residue containing iron, aluminum, and silicon. In this step, the mass ratio of the laterite nickel ore pulp to the lignite is 1000: (0.2-1.8). In the acid leaching process, such methods as pressure leaching or oxygen pressure leaching can be selected. In this embodiment, after the pressure leaching or oxygen pressure leaching, the Ni content in the obtained leaching residue containing nickel, cobalt, and manganese is less than 0.05%, the Co content is less than 0.005%, and the Mn content is less than 0.05%. The process conditions for pressure leaching include: a temperature of 220-260°C, a pressure of 3.0-4.0 MPa, and an acid consumption of 15-25 tons/ton of nickel. The process conditions for oxygen pressure leaching include: a temperature of 180-220°C, a pressure of 1.5-2.5 MPa, and an acid consumption of 25-40 tons/ton of nickel. Introducing a reducing agent, such as lignite, ferrous sulfate, sodium sulfite, sodium bisulfite, etc. before the pressure leaching or oxygen pressure leaching step, on the one hand, the transition of divalent manganese ions to a higher valence state can be inhibited, facilitating the subsequent extraction of manganese; on the other hand, it is advantageous to convert hexavalent chromium into trivalent chromium in the subsequent multistage neutralization process, so as to facilitate the removal of chromium. Wherein the leaching promoter is any one or more of sodium sulfate and copper sulfate, and introducing the leaching promoter during pressure leaching or oxygen pressure leaching can promote the leaching of nickel, cobalt and manganese.
(3) Subjecting the mixed pulp composed of the leaching solution containing nickel, cobalt, and manganese and the leaching residue containing iron, aluminum, and silicon to cyclic leaching and multistage neutralization successively to obtain a neutralized pulp. In this step, the process conditions for the cyclic leaching include: controlling the temperature to be 95-105°C to reduce the residual acid concentration from 30-50 g/L to less than 5 g/L. The process conditions for the multistage neutralization treatment include: controlling the pH to be 0.8-2 by adding a neutralizer; the neutralizer is an alkaline mixture of any one or more of lime milk, limestone, sodium hydroxide, magnesite, and magnesium hydroxide. Since the reducing agent has been added in the (2) step, a reducing agent such as ferrous sulfate, sodium sulfite, sodium bisulfite, etc. may be added again during the cyclic leaching and multistage neutralization treatment as a supplement to the reducing agent in step (2) to ensure sufficient reduction of chromium ions to trivalent. In this embodiment, the pressure leaching or oxygen pressure leaching with sulfuric acid is performed followed by a test. The contents of pollutants in the waste gas are as follows: solid particles <8 mg/m³, sulfur dioxide <32 mg/m³, sulfuric acid mist <10 mg/m³, meeting the discharge standards. The waste gas can be directly discharged, or the waste heat of waste gas or vapor can be reused, improving the utilization rate.
(4) Subjecting the neutralized pulp obtained by cyclic leaching and multistage neutralization treatment to dilution, multistage counter-current washing and tailing neutralization, and recovering iron metal from the obtained tailings by means of reduction roasting-magnetic separation. In the present step, the washing stages of the multistage counter-current washing are 3-9. The ratio of the washing water to the residue phase is 1: 1 to 7: 1. The Ni content of the end washing water is less than 0.1 g/L. The Ni content in the tail residue after neutralization is less than 0.06%. In the multistage neutralization treatment process, an appropriate amount of neutralizer is added to make the residue phase in a neutral state, and the residue phase after the neutralization treatment is subjected to solid-liquid separation by a thickener to obtain a tailing residue. The pH of the tailing residue is 6-9. The tailing residue mainly contains iron elements, and then iron metal is recovered by means of reduction roasting and magnetic separation. In the present embodiment, the metal element contents in the tailings leaching solution after recovering the iron metal are as follows: Ni < 3.0 mg/L, Cu < 0.02 mg/L, Zn < 0.2 mg/L, Cr⁶⁺< 0.15 mg/L. The tailings after recovery of iron can meet the direct discharge standard and could be directly discharged, meeting the production expectation of green and environmental protection.
(5) Subjecting an end-stage liquid phase after the multistage counter-current washing to multistage iron-aluminum-chromium removal, thickening, and separation under conditions of adding a neutralizer and a precipitation promoter. In this step, the multistage iron-aluminum-chromium removal is composed of one-stage iron-aluminum-chromium removal, two- and more-stage iron-aluminum-chromium removal; a liquid phase after a former-stage iron-aluminum-chromium removal is subjected to a latter-stage iron-aluminum-chromium removal treatment, and a residue phase after the one-stage iron-aluminum-chromium removal is returned and subjected to multistage counter-current washing again, and the residue phase after the two- and more-stage iron-aluminum-chromium removal is reused and subjected to cyclic leaching and multistage neutralization treatment again. Wherein the process conditions for multistage iron-aluminum-chromium removal include: the number of process stages is 2-7, the temperature is controlled to be 55-90°C, and the pH is 2.5-5.5; the neutralizer is a mixture of any one or more of lime milk, limestone, sodium hydroxide, magnesium ore, and magnesium hydroxide; the precipitation promoter is a mixture of any one or more of an organic polymer and an inorganic polymer, such as polyacrylamide, polyaluminum chloride, etc. and is not limited herein.

In a specific embodiment, the process conditions for one-stage iron aluminum chromium removal include: adding a neutralizer, charging compressed air, controlling the pH to be 2.5-4.0, the temperature to be 70-90°C, and the reaction time to be 1-2 h. The mole ratio of the oxygen content in the compressed air to the reduced carbon content of lignite in the process of pressure leaching or oxygen pressure leaching is 1: (0.95-0.85), so as to ensure that the oxygen content of the charged compressed air is just capable of oxidizing iron to trivalent iron, while also avoiding the re-conversion of reduced trivalent chromium to hexavalent chromium. The ratio of oxygen content to reducing agent in this process needs to be strictly controlled. In actual operation, the content of divalent iron ions in the one-stage iron-aluminum-chromium removal process can be monitored in real time, and the supplement amount of reducing agent in the process of cyclic leaching and multistage neutralization treatment can be adjusted adaptively according to the content of divalent iron ions so as to meet the control requirements of just oxidizing iron into trivalent iron and not converting trivalent chromium into hexavalent chromium. After the step of one-stage iron-aluminum-chromium removal is completed, a considerable part of nickel, cobalt and manganese are still present in the residue phase, and the residue phase after the one-stage iron-aluminum-chromium removal is recycled and subjected to multistage counter-current washing again, so as to facilitate the sufficient extraction of nickel, cobalt and manganese in the residue phase. Since the chromium ions are maintained trivalent by introducing a reducing agent in the preceding steps (2) and (3), the chromium ions are precipitated as Cr(OH)₃ during the one-stage iron-aluminum-chromium removal process, achieving the simultaneous removal of iron-aluminum-chromium metal.

In a specific embodiment, the process conditions for the two- and more-stage iron-aluminum-chromium removal include: controlling the pH to 4.0-5.5, the temperature to be 55-80°C, and the reaction time to be 2-10 h. In the process of two- and more-stage iron-aluminum-chromium removal, the remaining iron, aluminum, and chromium in the liquid phase can be further removed simultaneously, which improves the removal efficiency of the impurity metal elements to ensure the subsequent extraction of nickel, cobalt, and manganese to obtain a purer product. However, the purpose of recycling the residue phase of the two- and more-stage iron-aluminum-chromium removal and re-performing the cyclic leaching and multistage neutralization treatment is that a certain amount of nickel, cobalt, and manganese remain in the residue phase after the two- and more-stage iron-aluminum-chromium removal, nickel, cobalt, and manganese can be further extracted as far as possible, by the reused. At the same time, since there is a great difference in pH value between the two- and more-stage iron-aluminum-chromium removal and the cyclic leaching-multistage neutralization treatment, the reuse of the residue phase of the two- and more-stage iron-aluminum-chromium removal can reduce the amount of the neutralizer used in the cyclic leaching-one-stage neutralization treatment to a certain extent, so as to achieve the purpose of cost saving. In actual operation, the content of divalent iron ions in the process of two- and more-stage iron-aluminum-chromium removal can be monitored in real time, and the supplementary amount of air in the process of two- and more-stage iron-aluminum-chromium removal can be adjusted adaptively according to the content of divalent iron ions. If the charging amount of compressed air in the step of one-stage iron-aluminum-chromium removal is low, it is necessary to supplement a certain amount of air in the process of two- and more-stage iron-aluminum-chromium removal to further oxidize iron into trivalent iron so as to further precipitate residual iron, and at the same time, control against the conversion of trivalent chromium to hexavalent chromium.

(6) Subjecting a tail-stage liquid phase after the multistage iron-aluminum-chromium removal to multistage nickel-cobalt-manganese synthesis, and subjecting the obtained mixed nickel-cobalt-manganese hydroxide to acid dissolution and liquid phase extraction to obtain a purified liquid, or subjecting the tail-stage liquid phase after the multistage iron-aluminum-chromium removal to liquid phase extraction directly to obtain a purified liquid, wherein the purified liquid is a solution composed of any one or more of a nickel-cobalt-manganese mixed salt, a nickel salt, a cobalt salt, and a manganese salt; and concentrating the purified liquid by evaporation to obtain purified crystals, wherein the purified crystals are crystals composed of any one or more of a nickel-cobalt-manganese mixed salt, a nickel salt, a cobalt salt, and a manganese salt, and the liquid phase extraction comprises liquid phase co-extraction and liquid phase selective extraction. Wherein the mixed nickel-cobalt-manganese salt is a mixed salt of battery-grade nickel sulfate, cobalt sulfate and manganese sulfate; the nickel salt is battery-grade nickel sulfate; the cobalt salt is battery-grade cobalt sulfate; and the manganese salt is battery-grade manganese sulfate; the resulting high-concentration pure liquid or pure crystals is used for subsequent nickel-cobalt-manganese preparation of a ternary precursor.

With reference to FIG. 1, it can be seen that in the process of the disclosure, there are two subsequent treatment methods for the liquid phase after multistage iron-aluminum-chromium removal, and both can obtain a high-concentration pure liquid (namely, a solution composed of any one or more of a mixed nickel-cobalt-manganese salt, a nickel salt, a cobalt salt and a manganese salt):

In one manner, the tail-stage liquid phase after multistage iron-aluminum-chromium removal is directly fed into the liquid phase extraction. In this way, the soluble mixed solution containing nickel, cobalt, and manganese can be obtained more quickly for the preparation of the subsequent ternary precursor, so that the process flow can be significantly simplified and the extraction efficiency of nickel, cobalt and manganese can be improved. At the same time, the valuable metals such as copper, zinc, and scandium in the raffinate can be comprehensively recovered by using the multistage precipitation method.

In another manner, the multistage nickel-cobalt-manganese synthesis is composed of one-stage nickel-cobalt-manganese synthesis, and two- and more-stage nickel-cobalt-manganese synthesis, and a liquid phase after a former-stage nickel-cobalt-manganese synthesis is subjected to a latter-stage nickel-cobalt-manganese synthesis; the tail-stage liquid phase of the multistage iron-aluminum-chromium removal is subjected to one-stage nickel-cobalt-manganese synthesis treatment; the mixed nickel-cobalt-manganese hydroxide is obtained after the one-stage nickel-cobalt-manganese synthesis; and the mixed nickel-cobalt-manganese hydroxide synthesized in the tail-stage of the multistage nickel-cobalt-manganese synthesis is returned and subjected to cyclic leaching and multistage neutralization treatment again, so that a small amount of nickel, cobalt, and manganese remaining in the residue phase after the two stages of nickel-cobalt can re-enter the process to be extracted, so that the finally extraction rates of nickel, cobalt and manganese are improved. At the same time, the tail-stage liquid phase of the multistage nickel-cobalt-manganese synthesis is discharged after waste water treatment. In the mixed nickel-cobalt-manganese hydroxide, the Ni content is 35-45%, the Co content is 2.5-5.0%, and the Mn content is 6-12%.

In a specific embodiment, the contents of the metal elements after the waste water treatment are as follows: Cu < 0.01 mg/L, Cd < 0.001 mg/L, Zn < 0.05 mg/L, Pb < 0.027 mg/L, Ni < 0.1 mg/L, Cr⁶⁺< 0.05 mg/L, Fe < 0.027 mg/L, and Co < 0.008 mg/L. The discharged waste water can meet the waste water discharge standard and can be directly discharged, meeting the production expectations of green and environmental protection.

In a specific embodiment, the process conditions for the one-stage synthesis of nickel cobalt manganese include: adding a neutralizer and a seed crystal, controlling the pH value to be 6.5-7.4, the temperature to be 50-70°C, and the reaction time to be 5-7 h; the seeds are derived from crystals obtained by controlled crystallization during the two- and more-stage nickel-cobalt-manganese synthesis.

In a specific embodiment, the process conditions for the two- and more-stage nickel-cobalt-manganese synthesis include: controlling the pH value to be 7.5-10.0, the temperature to be 40-90°C, and the reaction time to be 0.5-1.5 h. The crystals preparedin the two- and more-stage nickel-cobalt-manganese synthesis are combined with the tail-stage liquid phase of the multistage iron-aluminum-chromium removal for the one-stage nickel-cobalt-manganese synthesis, and the introduced seed crystal can be used to accelerate the efficiency of the one-stage nickel-cobalt-manganese synthesis; in addition, the introduced seed crystal is obtained by simultaneous preparation in the process flow, and no additional seed crystal is needed, improving the preparation efficiency.

(7) Taking the nickel-cobalt-manganese mixed salt solution as a mother liquor, or taking aqueous solution of the nickel-cobalt-manganese mixed salt crystal as a mother liquor, according to the content ratio of nickel-cobalt-manganese in the nickel-cobalt-manganese ternary precursor, adding the solutions or crystals of the nickel salt, cobalt salt, and manganese salt into the mother liquor, formulating the content ratio of nickel-cobalt-manganese in the mother liquor, and performing a controlled precipitation reaction with a precipitant and a complexing agent under a protective atmosphere to obtain the nickel-cobalt-manganese ternary precursor; or according to the nickel-cobalt-manganese content ratio in the nickel-cobalt-manganese ternary precursor, formulating the nickel-cobalt-manganese content ratio, mixing and formulating the solutions of the nickel salt, cobalt salt, and manganese salt or aqueous solutions of the nickel salt, cobalt salt, and manganese salt crystals, so that the nickel-cobalt-manganese content ratio in the formulated mixed solution matches the nickel-cobalt-manganese content ratio in the nickel-cobalt-manganese ternary precursor, and performing a controlled precipitation reaction with a precipitant and a complexing agent under a protective atmosphere to obtain the nickel-cobalt-manganese ternary precursor.

It can be seen that various raw material compounding methods can be used when preparing the nickel-cobalt-manganese ternary precursor, such as:
I) Taking the mixed nickel-cobalt-manganese salt solution obtained in step 9) as a mother liquor, according to the nickel-cobalt-manganese content ratio in the nickel-cobalt-manganese ternary precursor, adding the nickel salt, cobalt salt and manganese salt solution obtained in step 9) into the mother liquor, formulating the nickel-cobalt-manganese content ratio in the mother liquor, and performing a controlled precipitation reaction with a precipitant and a complexing agent under a protective atmosphere to prepare a nickel-cobalt-manganese ternary precursor.
II) Taking the aqueous solution of the mixed nickel-cobalt-manganese salt crystals obtained in step 9) as a mother liquor, according to the content ratio of nickel-cobalt-manganese in the nickel-cobalt-manganese ternary precursor, adding the crystals of the nickel salt, cobalt salt and manganese salt obtained in step 9) into the mother liquor after being dissolved in water, formulating the content ratio of nickel-cobalt-manganese in the mother liquor, and performing a controlled precipitation reaction with a precipitant and a complexing agent under a protective atmosphere to prepare the nickel-cobalt-manganese ternary precursor.
III) According to the content ratio of nickel-cobalt-manganese in the nickel-cobalt-manganese ternary precursor, subjecting the nickel salt, cobalt salt and manganese salt solution obtained in step 9) to a controlled precipitation reaction with a precipitant and a complexing agent under a protective atmosphere to prepare the nickel-cobalt-manganese ternary precursor.
IV) According to the content ratio of nickel-cobalt-manganese in the nickel-cobalt-manganese ternary precursor, subjecting the aqueous solution of the nickel salt, cobalt salt and manganese salt obtained in step 9) to a controlled precipitation reaction with a precipitant and a complexing agent under a protective atmosphere to prepare the nickel-cobalt-manganese ternary precursor.

Of course, other raw material compounding methods can also be used to prepare the nickel-cobalt-manganese ternary precursor, which will not be described in detail herein.

The nickel-cobalt-manganese ternary precursor prepared in the present step has the chemical formula of NiₓCo_{y}Mn_{z}(OH)₂, wherein 0< x <1, 0 ≤ y <1, 0 ≤ z <1, and x + y + z = 1. The nickel-cobalt-manganese ternary precursor satisfies the preparation requirements of cathode materials for ternary power cells, including a common ternary material, a high-voltage ternary material, a high nickel/ultra-high nickel ternary material, and a lithium-rich manganese-based material. The cross-sectional structure of the nickel-cobalt-manganese ternary precursor is radially arrangement or non-radially arrangement. The pore distribution state of the nickel-cobalt-manganese ternary precursor is any one of pore uniform distribution, pore internal concentrated distribution, pore external concentrated distribution, and pore multi-layer annular distribution. The nickel-cobalt-manganese element distribution state of the nickel-cobalt-manganese ternary precursor is any one of a uniform distribution, a double-layer or multi-layer core-shell distribution, a gradient distribution, a full concentration gradient distribution, and a double-gradient distribution.

The specific process steps of the above-mentioned nickel-cobalt-manganese ternary precursor include:
a) A mixed salt solution A with a total metal ion concentration of 1-2 mol/L can be prepared according to the content ratio of nickel-cobalt-manganese in the nickel-cobalt-manganese ternary precursor by using the above-mentioned raw material compounding manner; if core-shell or gradient structure precursors are synthesized, salt solutions of various concentrations may be formulated.
b) A doping element soluble salt is formulated into a doping element solution B of 0.01-0.1 mol/L. Preferably, the doping element is one or more of aluminum, magnesium, zirconium, titanium, yttrium, tungsten, molybdenum, calcium, niobium, lanthanum, indium, strontium, tantalum, iron, copper, zinc, boron, fluorine, and vanadium. This step can be omitted if the precursor is undoped.
c) A coating element soluble salt is formulated into a coating solution C of 0.1-1 mol/L. Preferably, the coating element is one or more of cobalt, manganese, aluminum, magnesium, zirconium, titanium, yttrium, tungsten, molybdenum, calcium, niobium, lanthanum, indium, strontium, tantalum, iron, copper, and zinc. This step can be omitted if the precursor is not coated.
d) A certain amount of pure water is added into the reactor, and a precipitant and a complexing agent are added to adjust the pH of the base solution to 12-13, and the concentration of the complexing agent is 0.1-20 g/L. Preferably, the impeller of the reactor is selected from one or more combinations of straight-blade open turbine impellers, pitched-blade open turbine impellers, pitched-blade disc turbine impellers, and the like. The amount of pure water added is 1: 3 to 9: 10 of the reactor volume. The precipitant is one or more of potassium hydroxide, sodium hydroxide, or sodium carbonate, most preferably the industrial liquid alkali. The complexing agent is one or more of ammonia, ammonium carbonate, citric acid, oxalic acid, acetic acid, and EDTA, most preferably ammonia.
e) Under the protection of the nitrogen atmosphere, the mixed salt solution, doping element solution (if there is no doping, the solution is omitted), precipitant, and complexing agent are added into the reactor through a metering system to perform a controlled precipitation reaction. The pH of the reaction is kept in the range of 9-13, the concentration of the complexing agent is in the range of 0.1-20 g/L, and the temperature is in the range of 40-80 50-500 rpm. The D50 is monitored during the reaction. When the D50 reaches 2-20 µm, the reaction is stopped to obtain a ternary precursor pulp.
f) The coating solution, the precipitant, and the complexing agent are continued to be added to the reactor in parallel flow. The reaction conditions are kept unchanged. The reaction is stopped after 1-20 h to obtain a coating-type ternary precursor pulp.
g) The obtained precursor pulp is washed, dried, sieved, de-ironed, and packaged to obtain a ternary precursor material.

In a specific embodiment, the nickel-cobalt-manganese ternary precursor has a D50 of 2-20 mum, a tap density of 0.5-2.6 g/cm³, and a BET surface area of 2-50 m²/g.

(11) After the preparation of the nickel-cobalt-manganese ternary precursor is completed, according to the content ratio of nickel-cobalt-manganese in the cathode material for a ternary power battery, the nickel-cobalt-manganese ternary precursor is mixed with lithium carbonate or lithium hydroxide at a high temperature to synthesize the cathode material for the ternary power battery.

In the following, the effect of the green method for hydrometallurgical production of new energy raw materials of nickel, cobalt, and manganese from the laterite nickel ore described above is illustrated by specific examples. All the following examples are carried out on a laterite nickel ore of a limonite type in Indonesia. The nickel content in the ore is 1.32%; the cobalt content is 0.12%; the Cr₂O₃ content is 2.78%; the MnO content is 1.03%; the Al₂O₃ content is 7.86%; the SiO₂ content is 14.72%; and the Fe content is 41.25% as determined by mass percentage. The results showed that the sample was a typical low-grade limonite laterite nickel ore.

### Example 1

The specific steps of the green technology for the hydrometallurgical production of a nickel-cobalt-manganese new energy raw material from laterite nickel ore in this example are as follows:
1) The laterite nickel ore raw material was subjected to pre-treatment processes such as ore blending, ore washing, beneficiation, grinding, and thickening to obtain chromite and laterite nickel ore pulp. During the beneficiation process, a combined beneficiation process of gravity separation and magnetic separation was used to obtain a smelting-grade chromite concentrate, with a Cr₂O₃ content of 34.62% and a chromite-to-iron ratio of 1.53. The content ratio of nickel-cobalt-manganese in the laterite nickel ore pulp was adjusted to be similar to the ratio of nickel-cobalt-manganese content in the nickel-cobalt-manganese ternary precursor.
2) The obtained laterite nickel ore pulp was concentrated to 36% concentration, and lignite powder was added with the mass ratio of the laterite nickel ore pulp to lignite being 1000: 1, and sent to a high-pressure reactor together with a sodium sulfate leaching promoter. The leaching reaction was carried out under the high-pressure leaching conditions of a temperature of 255°C, a pressure of 4.0 MPa, and an acid consumption of 20 ton/ton of nickel.
3) The ore pulp after high-pressure leaching was subjected to cyclic leaching and multistage neutralization, followed by a multistage counter-current washing process. The washing stage was 6; the ratio of washing water to the residue phase was 4: 1. After solid-liquid separation by a thickener, the residue phase was added with an appropriate amount of lime milk neutralizer to make the residue phase in a neutral state of pH = 6.7. Then, metal iron was recovered and tailing residue was discharged.
4) The liquid phase obtained by the multistage counter-current washing was further subjected to a one-stage iron-aluminum-chromium removal. The process conditions for the one-stage iron-aluminum-chromium removal included: the temperature was controlled to be 85°C; the pH was 3.0; and the reaction time was 1 h. The residue phase after the one-stage iron-aluminum-chromium removal was reused for CCD counter-current washing. The liquid phase after one-stage iron-aluminum-chromium removal was subjected to a two-stage iron-aluminum-chromium removal. The process conditions for the two-stage iron-aluminum-chromium removal included: the temperature was controlled to be 79°C; the pH was 4.8; and the reaction time was 3 h. The residue phase after the two-stage iron-aluminum-chromium removal was reused for the cyclic leaching and neutralization again.
5) The liquid after two-stage iron-aluminum-chromium removal was added with a neutralizer for a one-stage nickel-cobalt-manganese synthesis to obtain a mixed nickel-cobalt-manganese hydroxide after the one-stage nickel-cobalt-manganese synthesis. Process conditions for the nickel-cobalt-manganese synthesis included: the pH value was 7.0; the reaction temperature was 66°C; and the reaction time was 3 h. The introduced seed crystal was derived from the crystal obtained by crystallization during the two-stage nickel-cobalt-manganese synthesis. The liquid phase of the one-stage nickel-cobalt-manganese synthesis was subjected to the two-stage nickel-cobalt-manganese synthesis. The residue phase of the two-stage nickel-cobalt-manganese synthesis was reused for the cyclic leaching and neutralization treatment again. The liquid phase of the two-stage nickel-cobalt-manganese synthesis was discharged after waste water treatment. The process conditions for the two-stage nickel-cobalt-manganese synthesis included: the pH value was controlled to be 8.0 and the reaction temperature was 50°C. The devitrified crystals in the process of the two-stage nickel-cobalt-manganese synthesis were combined with the liquid phase after the two-stage iron-aluminum-chromium removal for the one-stage nickel-cobalt-manganese synthesis, accelerating the one-stage nickel-cobalt-manganese synthesis.
6) The mixed nickel-cobalt-manganese hydroxide was subjected to liquid-phase selective extraction using P204 and P507 to respectively obtain battery-grade mixed nickel-cobalt-manganese salt crystals, nickel sulfate crystals, cobalt sulfate crystals, manganese sulfate crystals, and mixed nickel-cobalt-manganese salt crystals as a mother liquor after being dissolved in water, which were formulated into a mixed salt solution A having a total metal concentration of 2 mol/L by using nickel sulfate crystals, cobalt sulfate crystals and manganese sulfate crystals according to a molar ratio of nickel: cobalt: manganese to be 80: 10: 10.
7) Magnesium sulfate was formulated into a doping element solution B of 0.01 mol/L, and cobalt sulfate was formulated into a coating layer solution C of 1 mol/L. Pure water was added to the reactor. The pH of the base solution was adjusted to 13 by adding 32% industrial liquid alkali and 16% ammonia water, and the ammonia concentration was 10 g/L. The reactor was of a double-layer stirring. The upper layer was of pitched-blade disc turbine impellers, and the lower layer was of straight-blade open turbine impellers.
8) Under the protection of a nitrogen atmosphere, the mixed salt solution A, the doping element solution B, 32% of an industrial liquid alkali, and 16% of ammonia water were fed to a reactor for a controlled precipitation reaction. The pH of the reaction was maintained to be 12-12.5; the ammonia concentration was controlled to be 10 g/L; the temperature was controlled to be 65°C; and the rotational speed was controlled to be 300 RPM. The D50 was monitored during the reaction. When the D50 reached 5 µm, the reaction was stopped to obtain a Mg-doped NCM811 ternary precursor ore pulp.
9) The coating solution C, 32% of the industrial liquid alkali, and 16% of aqueous ammonia were continued to be added to the reactor in parallel flow. The reaction pH was kept to be 11.5-12, and other conditions were consistent with step 8). The reaction was stopped after 3 h to obtain a Co(OH)₂-coated and Mg-doped NCM811 ternary precursor pulp. After washing, drying, screening, iron removal, and packaging, a Co(OH)₂-coated and Mg-doped NCM811 ternary precursor material was obtained.

### Example 2

The specific steps of the green technology for the hydrometallurgical production of a nickel-cobalt-manganese new energy raw material from laterite nickel ore in this example are as follows:
1) The laterite nickel ore raw material was subjected to pre-treatment processes such as ore blending, ore washing, beneficiation, grinding, and thickening to obtain chromite and laterite nickel ore pulp. During the beneficiation process, a combined beneficiation process of gravity separation and magnetic separation was used to obtain a smelting-grade chromite concentrate, with a Cr₂O₃ content of 33.82% and a chromite-to-iron ratio of 1.41. The content ratio of nickel-cobalt-manganese in the laterite nickel ore pulp was adjusted to be similar to the ratio of nickel-cobalt-manganese content in the nickel-cobalt-manganese ternary precursor.
2) The obtained laterite nickel ore pulp was concentrated to 36% concentration, and lignite powder was added with the mass ratio of the laterite nickel ore pulp to lignite being 1000: 0.8, and sent to a high-pressure reactor together with a sodium sulfate leaching promoter. The leaching reaction was carried out under the high-pressure leaching conditions of a temperature of 255°C, a pressure of 4.0 MPa, and an acid consumption of 20 ton/ton of nickel.
3) The ore pulp after high-pressure leaching was subjected to cyclic leaching and multistage neutralization, followed by a multistage counter-current washing process. The washing stage was 6; the ratio of washing water to the residue phase was 4: 1. After solid-liquid separation by a thickener, the residue phase was added with an appropriate amount of lime milk neutralizer to make the residue phase in a neutral state of pH = 6.7. Then, metal iron was recovered and tailing residue was discharged.
4) The liquid phase obtained by the multistage counter-current washing was further subjected to a one-stage iron-aluminum-chromium removal. The process conditions for the one-stage iron-aluminum-chromium removal included: the temperature was controlled to be 85°C; the pH was 3.0; and the reaction time was 1 h. The residue phase after the one-stage iron-aluminum-chromium removal was reused for CCD counter-current washing. The liquid phase after one-stage iron-aluminum-chromium removal was subjected to a two-stage iron-aluminum-chromium removal. The process conditions for the two-stage iron-aluminum-chromium removal included: the temperature was controlled to be 79°C; the pH was 4.8; and the reaction time was 3 h. The residue phase after the two-stage iron-aluminum-chromium removal was reused for the cyclic leaching and neutralization again.
5) The liquid after two-stage iron-aluminum-chromium removal was added with a neutralizer for a one-stage nickel-cobalt-manganese synthesis to obtain a mixed nickel-cobalt-manganese hydroxide after the one-stage nickel-cobalt-manganese synthesis. Process conditions for the nickel-cobalt-manganese synthesis included: the pH value was 7.0; the reaction temperature was 66°C; and the reaction time was 3 h. The introduced seed crystal was derived from the crystal obtained by crystallization during the two-stage nickel-cobalt-manganese synthesis. The liquid phase of the one-stage nickel-cobalt-manganese synthesis was subjected to the two-stage nickel-cobalt-manganese synthesis. The residue phase of the two-stage nickel-cobalt-manganese synthesis was reused for the cyclic leaching and neutralization treatment again. The liquid phase of the two-stage nickel-cobalt-manganese synthesis was discharged after waste water treatment. The process conditions for the two-stage nickel-cobalt-manganese synthesis included: the pH value was controlled to be 8.0 and the reaction temperature was 50°C. The devitrified crystals in the process of the two-stage nickel-cobalt-manganese synthesis were combined with the liquid phase after the two-stage iron-aluminum-chromium removal for the one-stage nickel-cobalt-manganese synthesis, accelerating the one-stage nickel-cobalt-manganese synthesis.
6) The mixed nickel-cobalt-manganese hydroxide was subjected to liquid-phase selective extraction using P204 and P507 to obtain a battery-grade mixed nickel-cobalt-manganese salt solution, a nickel sulfate solution, a cobalt sulfate solution, and a manganese sulfate solution, respectively. The mixed nickel-cobalt-manganese salt solution was used as a mother liquor and formulated into a mixed salt solution A having a total metal concentration of 2 mol/L by using the nickel sulfate solution, the cobalt sulfate solution, and the manganese sulfate solution according to the molar ratio of nickel: cobalt: manganese to be 70: 10: 20.
7) 8 m³ of pure water was added to a 12 m³ reactor. The pH of the base solution was adjusted to 12 by adding 32% industrial liquid alkali and 16% ammonia water, and the ammonia concentration was 15g/L. Wherein the reactor was of single-layer pitched-blade disc turbine impellers.
8) Under the protection of a nitrogen atmosphere, the mixed salt solution A, the doping element solution B, 32% of an industrial liquid alkali, and 16% of ammonia water were fed to a reactor for a controlled precipitation reaction through a measurement system. The pH of the reaction was maintained to be 12-12.5; the ammonia concentration was controlled to be 15 g/L; the temperature was controlled to be 60°C; and the rotational speed was controlled to be 400 RPM. D50 was monitored during the reaction.
9) When the D50 reached 6 µm, the stirring speed was reduced to 300 RPM while a second complexing agent 20% sodium citrate solution was added. The sodium citrate concentration was kept to be 10 g/L. When the D50 reached 10 µm, the feeding of the second complexing agent sodium citrate solution was stopped, and the rotation speed was adjusted back to 400 RPM to continue the reaction. When the D50 reached 12 µm, the feeding was stopped to obtain a NCM712 ternary precursor pulp with annularly arranged pores. After washing, drying, screening, iron removal, and packaging, a Co(OH)₂-coated and Mg-doped NCM712 ternary precursor material was obtained. The pores of the Co(OH)₂-coated and Mg-doped NCM712 precursor were observed to be annularly arranged by SEM.

### Example 3

The specific steps of the green technology for the hydrometallurgical production of a nickel-cobalt-manganese new energy raw material from laterite nickel ore in this example are as follows:
1) The laterite nickel ore raw material was subjected to pre-treatment processes such as ore blending, ore washing, beneficiation, grinding, and thickening to obtain chromite and laterite nickel ore pulp. During the beneficiation process, a combined beneficiation process of gravity separation and magnetic separation was used to obtain a smelting-grade chromite concentrate, with a Cr₂O₃ content of 32.85% and a chromite-to-iron ratio of 1.56. The content ratio of nickel-cobalt-manganese in the laterite nickel ore pulp was adjusted to be similar to the ratio of nickel-cobalt-manganese content in the nickel-cobalt-manganese ternary precursor.
2) The obtained laterite nickel ore pulp was concentrated to 36% concentration, and lignite powder was added with the mass ratio of the laterite nickel ore pulp to lignite being 1000: 0.9, and sent to a high-pressure reactor together with a sodium sulfate leaching promoter. The leaching reaction was carried out under the high-pressure leaching conditions of a temperature of 255°C, a pressure of 4.0 MPa, and an acid consumption of 20 ton/ton of nickel.
3) The ore pulp after high-pressure leaching was subjected to cyclic leaching and multistage neutralization, followed by a multistage counter-current washing process. The washing stage was 6; the ratio of washing water to the residue phase was 4: 1. After solid-liquid separation by a thickener, the residue phase was added with an appropriate amount of lime milk neutralizer to make the residue phase in a neutral state of pH = 6.7. Then, metal iron was recovered and tailing residue was discharged.
4) The liquid phase obtained by the multistage counter-current washing was further subjected to a one-stage iron-aluminum-chromium removal. The process conditions for the one-stage iron-aluminum-chromium removal included: the temperature was controlled to be 85°C; the pH was 3.0; and the reaction time was 1 h. The residue phase after the one-stage iron-aluminum-chromium removal was reused for CCD counter-current washing. The liquid phase after one-stage iron-aluminum-chromium removal was subjected to a two-stage iron-aluminum-chromium removal. The process conditions for the two-stage iron-aluminum-chromium removal included: the temperature was controlled to be 79°C; the pH was 4.8; and the reaction time was 3 h. The residue phase after the two-stage iron-aluminum-chromium removal was reused for the cyclic leaching and neutralization again.
5) The liquid after two-stage iron-aluminum-chromium removal was added with a neutralizer for a one-stage nickel-cobalt-manganese synthesis to obtain a mixed nickel-cobalt-manganese hydroxide after the one-stage nickel-cobalt-manganese synthesis. Process conditions for the nickel-cobalt-manganese synthesis included: the pH value was 7.0; the reaction temperature was 66°C; and the reaction time was 3 h. The introduced seed crystal was derived from the crystal obtained by crystallization during the two-stage nickel-cobalt-manganese synthesis. The liquid phase of the one-stage nickel-cobalt-manganese synthesis was subjected to the two-stage nickel-cobalt-manganese synthesis. The residue phase of the two-stage nickel-cobalt-manganese synthesis was reused for the cyclic leaching and neutralization treatment again. The liquid phase of the two-stage nickel-cobalt-manganese synthesis was discharged after waste water treatment. The process conditions for the two-stage nickel-cobalt-manganese synthesis included: the pH value was controlled to be 8.0 and the reaction temperature was 50°C. The devitrified crystals in the process of the two-stage nickel-cobalt-manganese synthesis were combined with the liquid phase after the two-stage iron-aluminum-chromium removal for the one-stage nickel-cobalt-manganese synthesis, accelerating the one-stage nickel-cobalt-manganese synthesis.
6) The mixed nickel-cobalt-manganese hydroxide was subjected to liquid-phase selective extraction using P204 and P507 to obtain battery-grade nickel sulfate crystals, cobalt sulfate crystals, and manganese sulfate crystals, respectively. After the nickel sulfate crystals, cobalt sulfate crystals and manganese sulfate crystals were dissolved in water, nickel sulfate solution, cobalt sulfate solution, and manganese sulfate solution with a metal concentration of 1.5 mol/L were formulated, respectively.
7) Under the protection of a nitrogen atmosphere, the nickel sulfate solution, the cobalt sulfate solution, the manganese sulfate solution, 32% of an industrial liquid alkali, and 15% of ammonia water were fed into a reactor with a multilayer blade structure through a metering system to perform a co-precipitation reaction. The flow rate of nickel sulfate, cobalt sulfate, and manganese sulfate solution showed a gradient change, but the total flow rate was unchanged. The flow ratio of nickel sulfate, cobalt sulfate, and manganese sulfate was 98: 1: 1 at the beginning of the feed and 30: 20: 50 at the end of the feed. The pH of the reaction was maintained to be 11.5-12; the ammonia concentration was controlled to be 10 g/L; the temperature was controlled to be 50°C; and the rotational speed was controlled to be 200 rpm. The D50 was monitored during the reaction. The reaction was stopped when the D50 reached 18 µm to obtain a full-concentration gradient ternary precursor pulp with an inner core of NCM98/1/1 and an outer shell of NCM30/20/50. After washing, drying, screening, iron removal, and packaging, a full-concentration gradient ternary precursor material with the inner core of NCM98/1/1 and the outer shell of NCM30/20/50 was obtained.

### Example 4

The specific steps of the green technology for the hydrometallurgical production of a nickel-cobalt-manganese new energy raw material from laterite nickel ore in this example are as follows:
1) The laterite nickel ore raw material was subjected to pre-treatment processes such as ore blending, ore washing, beneficiation, grinding, and thickening to obtain chromite and laterite nickel ore pulp. During the beneficiation process, a combined beneficiation process of gravity separation and magnetic separation was used to obtain a smelting-grade chromite concentrate, with a Cr₂O₃ content of 35.11% and a chromite-to-iron ratio of 1.33. The content ratio of nickel-cobalt-manganese in the laterite nickel ore pulp was adjusted to be similar to the ratio of nickel-cobalt-manganese content in the nickel-cobalt-manganese ternary precursor.
2) The obtained laterite nickel ore pulp was concentrated to 36% concentration, and lignite powder was added with the mass ratio of the laterite nickel ore pulp to lignite being 1000: 1.1, and sent to a high-pressure reactor together with a sodium sulfate leaching promoter. The leaching reaction was carried out under the high-pressure leaching conditions of a temperature of 255°C, a pressure of 4.0 MPa, and an acid consumption of 20 ton/ton of nickel.
3) The ore pulp after high-pressure leaching was subjected to cyclic leaching and multistage neutralization, followed by a multistage counter-current washing process. The washing stage was 6; the ratio of washing water to the residue phase was 4: 1. After solid-liquid separation by a thickener, the residue phase was added with an appropriate amount of lime milk neutralizer to make the residue phase in a neutral state of pH = 6.7. Then, metal iron was recovered and tailing residue was discharged.
4) The liquid phase obtained by the multistage counter-current washing was further subjected to a one-stage iron-aluminum-chromium removal. The process conditions for the one-stage iron-aluminum-chromium removal included: the temperature was controlled to be 85°C; the pH was 3.0; and the reaction time was 1 h. The residue phase after the one-stage iron-aluminum-chromium removal was reused for CCD counter-current washing. The liquid phase after one-stage iron-aluminum-chromium removal was subjected to a two-stage iron-aluminum-chromium removal. The process conditions for the two-stage iron-aluminum-chromium removal included: the temperature was controlled to be 79°C; the pH was 4.8; and the reaction time was 3 h. The residue phase after the two-stage iron-aluminum-chromium removal was reused for the cyclic leaching and neutralization again.
5) The liquid after two-stage iron-aluminum-chromium removal was added with a neutralizer for a one-stage nickel-cobalt-manganese synthesis to obtain a mixed nickel-cobalt-manganese hydroxide after the one-stage nickel-cobalt-manganese synthesis. Process conditions for the nickel-cobalt-manganese synthesis included: the pH value was 7.0; the reaction temperature was 66°C; and the reaction time was 3 h. The introduced seed crystal was derived from the crystal obtained by crystallization during the two-stage nickel-cobalt-manganese synthesis. The liquid phase of the one-stage nickel-cobalt-manganese synthesis was subjected to the two-stage nickel-cobalt-manganese synthesis. The residue phase of the two-stage nickel-cobalt-manganese synthesis was reused for the cyclic leaching and neutralization treatment again. The liquid phase of the two-stage nickel-cobalt-manganese synthesis was discharged after waste water treatment. The process conditions for the two-stage nickel-cobalt-manganese synthesis included: the pH value was controlled to be 8.0 and the reaction temperature was 50°C. The devitrified crystals in the process of the two-stage nickel-cobalt-manganese synthesis were combined with the liquid phase after the two-stage iron-aluminum-chromium removal for the one-stage nickel-cobalt-manganese synthesis, accelerating the one-stage nickel-cobalt-manganese synthesis.
6) The mixed nickel-cobalt-manganese hydroxide was subjected to liquid-phase selective extraction by using P204 and P507 respectively obtain a battery-grade nickel sulfate solution, cobalt sulfate solution, and manganese sulfate solution. The nickel sulfate solution, cobalt sulfate solution, and manganese sulfate solution were formulated to a mixed salt solution A having a total metal concentration of 2 mol/L according to a molar ratio of nickel: cobalt: manganese to be 90: 5: 5.
7) The purity of nitrogen was adjusted to 95% by using compressed air. Under the protection of a 95%. nitrogen atmosphere, the mixed salt solution A, the doping element solution B, 32% of an industrial liquid alkali, and 16% of ammonia water were fed to a reactor for a co-precipitation reaction through a measurement system. The pH of the reaction was maintained to be 11-11.5; the ammonia concentration was controlled to be 8 g/L; the temperature was controlled to be 45°C; and the rotational speed was controlled to be 250 RPM. The D50 was monitored during the reaction. When the D50 reached 20 µm, the feed was stopped to obtain a loose and porous NCM90/5/5 ternary precursor pulp with radial arranged primary particles. After washing, drying, screening, iron removal, and packaging, a loose and porous NCM90/5/5 ternary precursor pulp with radial arrangement of primary particles was obtained.

Several of the indicators in Examples 1-4 above were tested as follows.

### Test 1

The extraction rates of nickel, cobalt, and manganese in Examples 1-4 (specifically obtained by calculating the mass ratio of the solution or crystal of obtained mixed nickel-cobalt-manganese salt, nickel sulfate, cobalt sulfate, and manganese sulfate to the laterite nickel ore raw material) was tested and calculated. The ore pulp productivity ratios of the laterite nickel ore raw material after the pretreatment procedure in Examples 1-4 were tested and calculated, and the results are shown in Table 1. It can be seen that the ore pulp productivity in Examples 1-4 were relatively high, which can promote the subsequent leaching process to increase productivity and reduce energy consumption. The extraction rates of Ni, Co, and Mn obtained in the above-described embodiment were 94%, 92%, and 90%, respectively. The extraction rate of the existing laterite nickel ore hydrometallurgical process can be found in the paper ("Basic theory and process research of hydrometallurgical extraction of low-grade nickel laterite ore", doctoral dissertation of Central South University, LI Dong), which records that the leaching rates of Ni, Co, and Mn are 82.5%, 70.3% and 80.0%, respectively. It can be seen that the extraction rate of nickel, cobalt, and manganese in the disclosure is higher than that in the existing process.

**Table 1**

| | Ore pulp productivity ratio (m³/ton Metal Ni) | Extraction rates of nickel, cobalt, and manganese (%) | | |
|---|---|---|---|---|
| | | Ni | Co | Mn |
| Ex. 1 | 179.5 | 95.43 | 93.68 | 93.72 |
| Ex. 2 | 180.2 | 94.78 | 92.41 | 92.43 |
| Ex. 3 | 181.3 | 94.43 | 92.21 | 93.60 |
| Ex. 4 | 178.6 | 94.21 | 92.08 | 91.57 |

### Test 2

The contents of the valuable metal elements in the manganese sulfate, nickel sulfate, and cobalt sulfate solutions (i.e. pure solutions) obtained in Examples 1-4 were tested, and the results are shown in Tables 2-4.

**Table 2 Content test table of valuable metal elements in manganese sulfate solution**

| | Mn | Ca | Mg | Cu | Zn | Fe | Pb | Cd | Cr | Si | Al |
|---|---|---|---|---|---|---|---|---|---|---|---|
| Units | g/L | mg/L | | | | | | | | | |
| Ex. 1 | 156.4 | 2.4 | 2.5 | 0.4 | 0.5 | 1.2 | 3.8 | 0.3 | 0.7 | 4.0 | 1.2 |
| Ex. 2 | 151.9 | 2.3 | 2.2 | 0.3 | 0.6 | 1.1 | 4.2 | 0.4 | 0.5 | 3.8 | 1.1 |
| Ex. 3 | 135.4 | 1.9 | 1.9 | 0.5 | 0.5 | 1.6 | 3.4 | 0.4 | 0.5 | 3.6 | 1.3 |
| Ex. 4 | 129.8 | 2.1 | 2.1 | 0.4 | 0.7 | 1.4 | 3.6 | 0.5 | 0.6 | 4.1 | 1.2 |

**Table 3 Content test table of valuable metal elements in nickel sulfate solution**

| | Ni | Mn | Cu | Zn | Fe | Ca | Mg | Cr | Si | Pb | Al | Cd |
|---|---|---|---|---|---|---|---|---|---|---|---|---|
| Units | g/L | mg/L | | | | | | | | | | |
| Ex. 1 | 148.6 | 1.2 | 0.2 | 0.4 | 0.7 | 3.6 | 3.8 | 0.8 | 3.9 | 4.0 | 0.4 | 1.8 |
| Ex. 2 | 146.3 | 1.3 | 0.4 | 0.3 | 0.8 | 3.8 | 4.0 | 0.9 | 3.8 | 3.9 | 0.3 | 1.9 |
| Ex. 3 | 132.9 | 1.6 | 0.7 | 0.5 | 1.0 | 4.0 | 3.6 | 0.8 | 4.0 | 3.6 | 0.5 | 2.0 |
| Ex. 4 | 131.2 | 1.7 | 0.7 | 0.6 | 1.2 | 4.1 | 3.7 | 1.2 | 4.1 | 4.2 | 0.4 | 2.1 |

**Table 4 Content test table of valuable metal elements in cobalt sulfate solution**

| | Co | Cu | Zn | Fe | Ca | Mg | Cr | Si | Pb | Al | Cd |
|---|---|---|---|---|---|---|---|---|---|---|---|
| Units | g/L | mg/L | | | | | | | | | |
| Ex. 1 | 126.1 | 1.4 | 1.5 | 2.4 | 3.5 | 3.2 | 1.8 | 3.9 | 3.7 | 0.4 | 1.0 |
| Ex. 2 | 122.4 | 1.3 | 1.2 | 2.6 | 3.6 | 3.1 | 2.2 | 3.8 | 3.5 | 0.5 | 1.1 |
| Ex. 3 | 119.3 | 1.6 | 1.8 | 3.2 | 4.2 | 4.1 | 2.4 | 4.0 | 4.2 | 0.5 | 1.1 |
| Ex. 4 | 115.8 | 1.7 | 1.6 | 3.1 | 4.4 | 4.0 | 2.5 | 4.3 | 4.1 | 0.7 | 1.3 |

As can be seen from Table 2, the contents of metal values in the obtained manganese sulfate solution are as follows respectively: Mn > 120 g/L, Ca < 3.0 mg/L, Mg < 3.0 mg/L, Cu < 1.0 mg/L, Zn < 1.0 mg/L, Fe < 2.0 mg/L, Pb < 5.0 mg/L, Cd < 1.0 mg/L, Cr < 1.0 mg/L, Si < 5.0 mg/L, and Al < 2.0 mg/L. As can be seen from Table 3, the contents of the metal values in the obtained nickel sulfate solution are as follows respectively: Ni > 120 g/L, Mn < 2.0 mg/L, Cu < 1.0 mg/L, Zn < 1.0 mg/L, Fe < 1.5 mg/L, Ca < 5.0 mg/L, Mg < 5.0 mg/L, Cr < 2.0 mg/L, Si < 5.0 mg/L, Pb < 5.0 mg/L, Al < 1.0 mg/L, and Cd < 2.5 mg/L. As can be seen from Table 4, the contents of metal values in the obtained cobalt sulfate solution are as follows respectively: Co > 110 g/L, Cu < 2.0 mg/L, Zn < 2.0 mg/L, Fe < 3.5 mg/L, Ca < 5.0 mg/L, Mg < 5.0 mg/L, Cr < 3.0 mg/L, Si < 5.0 mg/L, Pb < 5.0 mg/L, Al <1.0 mg/L, and Cd < 1.5 mg/L. It can be readily seen that the obtained manganese sulfate solution, nickel sulfate solution and cobalt sulfate solution contain higher amounts of Mn, Ni, and Co, respectively, while containing lower amounts of other valuable metal elements, thus demonstrating that battery-grade nickel-cobalt-manganese mixed sulfate, manganese sulfate, nickel sulfate, and cobalt sulfate can be obtained by the aforementioned method and can be directly applied to the preparation of a ternary precursor.

### Test 3

The waste gas after the high-pressure acid leaching in step 2) of Examples 1 to 4 was tested, and the results are shown in Table 5. The contents of pollutants in the waste gas are as follows: solid particles < 8 mg/m³, sulfur dioxide < 32 mg/m³, and sulphuric acid mist <10 mg/m³. It can be seen that the waste water discharged by the above-mentioned methods all meet the emission standard of waste gas and can be directly discharged, meeting the production expectation of green and environment protection.

**Table 5**

| | Air pollutant content (mg/m³) | | |
|---|---|---|---|
| | Solid particles | Sulfur dioxide | Sulfuric acid mist |
| Example 1 | 6.4 | 43 | 5.3 |
| Example 2 | 5.2 | 27 | 1.9 |
| Example 3 | 2.3 | 32 | 2.6 |
| Example 4 | 3.6 | 36 | 3.1 |
| Waste water discharge standard | 10 | 100 | 20 |

### Test 4

Solid waste leaching toxicity tests were carried out on the tailings after iron recovery in step 3) of Examples 1-4, and the results are shown in Table 6, respectively (the actually measured content is much less than 0.001, which is denoted as "ND" in the table). It can be seen from Table 5 that the tailing leaching solution after iron recovery meets the requirements defined in the leaching toxicity standard of solid waste and can be directly discharged, meeting the production expectation of green and environment protection.

**Table 6**

| | Leaching Toxicity Test Results (mg/L) | | | | | | | | | | | Acid dissolution result |
|---|---|---|---|---|---|---|---|---|---|---|---|---|
| | Ni | Cu | Zn | Pb | Cd | Cr⁶⁺ | As | Be | Hg | Mo | Se | Ni |
| Example 1 | 1.30 | ND | 0.011 | ND | ND | 0.12 | ND | ND | ND | ND | ND | 0.075 |
| Example 2 | 2.78 | 0.011 | 0.16 | ND | ND | 0.063 | ND | ND | ND | ND | ND | 0.069 |
| Example 3 | 2.38 | ND | 0.025 | ND | ND | 0.11 | ND | ND | ND | ND | ND | 0.072 |
| Example 4 | 2.38 | ND | 0.026 | ND | ND | 0.005 | ND | ND | ND | ND | ND | 0.074 |
| Leaching toxicity criteria | 3.5 | 10 | 50 | 0.5 | 0.15 | 2.5 | 0.5 | 0.5 | 0.05 | 3.5 | 0.5 | 0.3 |

### Test 5

Metal elements were tested on the waste water treatment of the liquid phase of the two-stage nickel-cobalt-manganese synthesis in steps 5) of examples 1-4, and the results are shown in Table 7. The metal contents after the waste water treatment are as follows: Cu < 0.01mg/L, Cd < 0.001 mg/L, Zn < 0.05 mg/L, Pb < 0.027 mg/L, Ni < 0.1 mg/L, Cr⁶⁺< 0.05 mg/L, Fe < 0.027 mg/L, and Co < 0.008 mg/L. It can be seen that the waste water discharged by the above-mentioned methods all meet the waste water discharge standard and meet the production expectation of green and environment protection.

**Table 7**

| | Contents of valuable metal elements in waste water treatment (mg/L) | | | | | | | | |
|---|---|---|---|---|---|---|---|---|---|
| | Cu | Cd | Zn | Pb | Ni | Cr⁶⁺ | Tota Cr | Fe | Co |
| Example 1 | 0.06 | ND | 0.02 | 0.013 | 0.04 | 0.024 | 0.09 | 0.021 | 0.006 |
| Example 2 | 0.04 | ND | 0.03 | 0.018 | 0.03 | 0.030 | 0.11 | 0.025 | 0.005 |
| Example 3 | 0.08 | ND | 0.01 | 0.020 | 0.04 | 0.009 | 0.13 | 0.019 | 0.002 |
| Example 4 | 0.09 | ND | 0.02 | 0.011 | 0.08 | 0.037 | 0.08 | 0.024 | 0.007 |
| Waste water discharge standard | 2 | 0.05 | 5 | 0.1 | 0.5 | 0.1 | 0.5 | 5 | 0.4 |

Unlike the prior art, the disclosure provides a green method for hydrometallurgical production of a nickel-cobalt-manganese new energy raw material from laterite nickel ore. This method belongs to green technology and green process and mainly comprises such technologies and processes as ore blending, ore washing, beneficiation, pressure or oxygen pressure leaching, cyclic leaching and neutralization, counter-current washing, multistage iron-aluminum-chromium removals, multistage nickel-cobalt-manganese hydroxide synthesis, ion extraction, preparation of mixed solution of nickel-cobalt-manganese salt or independent solution of nickel-cobalt-manganese salt, preparation of crystal of mixed nickel-cobalt-manganese salt or independent crystals of nickel, cobalt, and manganese salts, preparation of a ternary precursor, and comprehensive treatment of waste water, waste gas, and waste slag so as to achieve simultaneous and efficient extraction of nickel-cobalt-manganese, and effectively recover valuable metal elements such as chromium, iron, copper, zinc, and scandium, producing a nickel-cobalt-manganese raw material meeting the requirements of a high-nickel ternary battery, and manufacturing a ternary precursor material (also referred to as a ternary "key" or a ternary "core") directly used in the manufacture of the ternary battery, so as to realize energy-saving, pollution-reducing and carbon-reducing, and promote the green transformation of laterite nickel ore from traditional smelting to the new energy raw material.

It should be noted that each of the above-mentioned examples belongs to the same inventive concept, and the description of each example has its own emphasis. Where the description of each example is not exhaustive, reference can be made to the description of other examples.

The foregoing examples merely present embodiments of the disclosure and are described in more detail and are not to be construed as limiting the scope of the disclosure. It should be noted that, for a person of ordinary skill in the art, a number of deformations and improvements can be made without departing from the conception of the disclosure, all of which fall within the scope of the disclosure. Therefore, the scope of the patent for the disclosure shall be governed by the appended claims.

## Claims

1. A green method for the hydrometallurgical production of a nickel-cobalt-manganese new energy raw material from laterite nickel ore, **characterized by** comprising the following steps:
(1) subjecting a laterite nickel ore raw material to a pre-treatment procedure of ore blending, ore washing, beneficiation, grinding, and thickening to obtain a chromite and a laterite nickel ore pulp; wherein the chromite is obtained by sorting in the beneficiation treatment, and the content ratio of nickel-cobalt-manganese in the laterite nickel ore pulp is adapted to the content ratio of nickel-cobalt-manganese in a nickel-cobalt-manganese ternary precursor;
(2) mixing the laterite nickel ore pulp with a reducing agent and a leaching promoter and then performing pressure leaching or oxygen pressure leaching to obtain a mixed pulp composed of leaching solution containing nickel, cobalt, and manganese and a leaching residue containing iron, aluminum, and silicon;
(3) subjecting the mixed pulp composed of the leaching solution containing nickel, cobalt, and manganese and the leaching residue containing iron, aluminum, and silicon to cyclic leaching and multistage neutralization successively to obtain a neutralized pulp;
(4) subjecting the neutralized pulp obtained by cyclic leaching and multistage neutralization treatment to dilution, multistage counter-current washing and tailing neutralization, and recovering iron metal from the obtained tailings by means of reduction roasting-magnetic separation;
(5) subjecting an end-stage liquid phase after the multistage counter-current washing to multistage iron-aluminum-chromium removal, thickening, and separation under conditions of adding a neutralizer and a precipitation promoter; wherein the multistage iron-aluminum-chromium removal is composed of one-stage iron-aluminum-chromium removal, two- and more-stage iron-aluminum-chromium removal; a liquid phase after a former-stage iron-aluminum-chromium removal is subjected to a latter-stage iron-aluminum-chromium removal treatment, and a residue phase after the one-stage iron-aluminum-chromium removal is returned and subjected to multistage counter-current washing again, and the residue phase after the two- and more-stage iron-aluminum-chromium removal is reused and subjected to cyclic leaching and multistage neutralization treatment again;
(6) subjecting a tail-stage liquid phase after the multistage iron-aluminum-chromium removal to multistage nickel-cobalt-manganese synthesis, and subjecting the obtained mixed nickel-cobalt-manganese hydroxide to acid dissolution and liquid phase extraction to obtain a purified liquid, or subjecting the tail-stage liquid phase after the multistage iron-aluminum-chromium removal to liquid phase extraction directly to obtain a purified liquid, wherein the purified liquid is a solution composed of any one or more of a mixed nickel-cobalt-manganese salt, a nickel salt, a cobalt salt, and a manganese salt; and concentrating the purified liquid by evaporation to obtain purified crystals, wherein the purified crystals are crystals composed of any one or more of a mixed nickel-cobalt-manganese salt, a nickel salt, a cobalt salt, and a manganese salt, and the liquid phase extraction comprises liquid phase co-extraction and liquid phase selective extraction;
(7) taking the mixed nickel-cobalt-manganese salt solution as a mother liquor, or taking an aqueous solution of the mixed nickel-cobalt-manganese salt crystal as a mother liquor, according to the content ratio of nickel-cobalt-manganese in the nickel-cobalt-manganese ternary precursor, adding the solutions or crystals of the nickel salt, cobalt salt, and manganese salt into the mother liquor, formulating the content ratio of nickel-cobalt-manganese in the mother liquor, and performing a controlled precipitation reaction with a precipitant and a complexing agent under a protective atmosphere to obtain the nickel-cobalt-manganese ternary precursor;
or according to the nickel-cobalt-manganese content ratio in the nickel-cobalt-manganese ternary precursor, mixing and formulating the solutions of the nickel salt, cobalt salt, and manganese salt or aqueous solutions of the nickel salt, cobalt salt, and manganese salt crystals, so that the nickel-cobalt-manganese content ratio in the formulated mixed solution matches the nickel-cobalt-manganese content ratio in the nickel-cobalt-manganese ternary precursor, and performing a controlled precipitation reaction with a precipitant and a complexing agent under a protective atmosphere to obtain the nickel-cobalt-manganese ternary precursor;
wherein the multistage nickel-cobalt-manganese synthesis is composed of one-stage nickel-cobalt-manganese synthesis, and two- and more-stage nickel-cobalt-manganese synthesis and a liquid phase after a former-stage nickel-cobalt-manganese synthesis is subjected to a latter-stage nickel-cobalt-manganese synthesis; the tail-stage liquid phase of the multistage iron-aluminum-chromium removal is subjected to one-stage nickel-cobalt-manganese synthesis treatment; the mixed nickel-cobalt-manganese hydroxide is obtained after the one-stage nickel-cobalt-manganese synthesis; and the mixed nickel-cobalt-manganese hydroxide synthesized in the tail-stage of the multistage nickel-cobalt-manganese synthesis is returned and subjected to cyclic leaching and multistage neutralization treatment again.

2. The green method for the hydrometallurgical production of the nickel-cobalt-manganese new energy raw material from laterite nickel ore according to claim 1, **characterized in that** the laterite nickel ore raw material is a mixture of any one or more of an ultra-low-grade laterite nickel ore, a low-grade laterite nickel ore and a medium-high-grade laterite nickel ore; and
the nickel content of the ultra-low-grade laterite nickel ore is less than 0.8%, the nickel content of the low-grade laterite nickel ore is 0.8-1.5%, and the nickel content of the medium-high-grade laterite nickel ore is greater than 1.5%.

3. The green method for the hydrometallurgical production of the nickel-cobalt-manganese new energy raw material from laterite nickel ore according to claim 1, **characterized in that** the laterite nickel ore pulp concentration is 36-43% and the ore pulp productivity ratio is 160-200 m³/ton of metal nickel; and
the chromite has a Cr content of greater than 30% and a Fe content of less than 40%.

4. The green method for the hydrometallurgical production of the nickel-cobalt-manganese new energy raw material from laterite nickel ore according to claim 1, **characterized in that** the beneficiation is specifically carried out by gravity separation and magnetic separation in sequence.

5. The green method for the hydrometallurgical production of the nickel-cobalt-manganese new energy raw material from laterite nickel ore according to claim 1, **characterized in that** after pressure leaching or oxygen pressure leaching, the resulting leaching residue containing nickel, cobalt, and manganese has a Ni content of less than 0.05%, a Co content of less than 0.005%, and an Mn content of less than 0.05%; and
after the pressure leaching or oxygen pressure leaching with sulfuric acid, the contents of pollutants in the waste gas are as follows: solid particles < 8 mg/m³, sulfur dioxide < 32 mg/m³, and sulfuric acid mist < 10 mg/m³.

6. The green method for the hydrometallurgical production of the nickel-cobalt-manganese new energy raw material from laterite nickel ore according to claim 1, **characterized in that** the mass ratio of the laterite nickel ore pulp to the reducing agent is 1000: (0.2-1.8), and the reducing agent is lignite; and
the leaching promoter is any one or more of sodium sulfate and copper sulfate.

7. The green method for the hydrometallurgical production of the nickel-cobalt-manganese new energy raw material from laterite nickel ore according to claim 1, **characterized in that** the process conditions for the pressure leaching comprise: a temperature of 220-260°C, a pressure of 3.0-4.0 MPa, and an acid consumption of 15-25 tons/ton of nickel; and
the process conditions for the oxygen pressure leaching comprise: a temperature of 180-220°C, a pressure of 1.5-2.5 MPa, and an acid consumption of 25-40 tons/ton of nickel.

8. The green method for the hydrometallurgical production of the nickel-cobalt-manganese new energy raw material from laterite nickel ore according to claim 1, **characterized in that** the process conditions for the cyclic leaching comprise: controlling the temperature to be 95-105°C and reducing the residual acid concentration from 30-50 g/L to less than 5 g/L; and
the process conditions for the multistage neutralization treatment comprise: controlling the pH to be 0.8-2 by adding a neutralizer.

9. The green method for the hydrometallurgical production of the nickel-cobalt-manganese new energy raw material from laterite nickel ore according to claim 1, **characterized in that** the number of washing stages for the multistage counter-current washing is 3-9; the ratio of washing water to residue phase is 1: 1 to 7: 1; the Ni content of an end washing water is less than 0.1 g/L; and the Ni content of neutralized tailings is less than 0.06%.

10. The green method for the hydrometallurgical production of the nickel-cobalt-manganese new energy raw material from laterite nickel ore according to claim 9, **characterized in that** the neutralizer is added to neutralize the tailings of the residue phase after the multistage counter-current washing, and the contents of metal elements in the tailings leaching solution after the recovery of iron metals are as follows: Ni < 3.0 mg/L, Cu < 0.02 mg/L, Zn < 0.2 mg/L, and Cr⁶⁺< 0.15 mg/L.

11. The green method for the hydrometallurgical production of the nickel-cobalt-manganese new energy raw material from laterite nickel ore according to claim 1, **characterized in that** the process conditions for the multistage iron-aluminum-chromium removal comprise: the number of process stages is 2-7, the temperature is controlled to be 55-90°C, and the pH is 2.5-5.5.

12. The green method for the hydrometallurgical production of the nickel-cobalt-manganese new energy raw material from laterite nickel ore according to claim 11, **characterized in that** the process conditions for the one-stage iron-aluminum-chromium removal comprise: adding the neutralizer, charging compressed air, andcontrolling the pH to be 2.5-4.0, the temperature to be 70-90°C, and the reaction time to be 1-2 h.

13. The green method for the hydrometallurgical production of the nickel-cobalt-manganese new energy raw material from laterite nickel ore according to claim 11, **characterized in that** the process conditions for the two- and more-stage iron-aluminum-chromium removal comprise: controlling the pH to 4.0-5.5, the temperature to be 55-80°C, and the reaction time to be 2-10 h.

14. The green method for the hydrometallurgical production of the nickel-cobalt-manganese new energy raw material from laterite nickel ore according to claim 1, **characterized in that** the process conditions for the one-stage nickel-cobalt-manganese synthesis comprise: adding a neutralizer and a seed crystal, and controlling the pH value to be 6.5-7.4, the temperature to be 50-70°C, and the reaction time to be 5-7 h; and
the seed crystals are derived from crystals obtained by controlled crystallization during the two- and more-stage nickel-cobalt-manganese synthesis process.

15. The green method for the hydrometallurgical production of the nickel-cobalt-manganese new energy raw material from laterite nickel ore according to claim 1, **characterized in that** the process conditions for the two- and more-stage nickel-cobalt-manganese synthesis comprise: controlling the pH value to be 7.5-10.0, the temperature to be 40-90°C, and the reaction time to be 0.5-1.5 h; and
in the process of the two- and more-stage nickel-cobalt-manganese synthesis, the crystals prepared by controlled crystallization are combined with the tail-stage liquid phase of the multistage iron-aluminum-chromium removal for the one-stage nickel-cobalt-manganese synthesis.

16. The green method for the hydrometallurgical production of the nickel-cobalt-manganese new energy raw material from laterite nickel ore according to claim 1, **characterized in that** the tail-stage liquid phase of the multistage nickel-cobalt-manganese synthesis is discharged after waste water treatment, and the contents of metal elements after waste water treatment are as follows: Cu < 0.01 mg/L, Cd < 0.001 mg/L, Zn < 0.05 mg/L, Pb < 0.027 mg/L, Ni < 0.1 mg/L, Cr⁶⁺< 0.05 mg/L, Fe < 0.027 mg/L, and Co < 0.008 mg/L.

17. The green method for the hydrometallurgical production of a nickel-cobalt-manganese new energy raw material from laterite nickel ore according to any one of claims 8, 12, and 14, **characterized in that** the neutralizer is a mixture of any one or more of lime milk, limestone, sodium hydroxide, magnesite, and magnesium hydroxide; and
the precipitation promoter is a mixture of any one or more of an organic polymer and an inorganic polymer.

18. The green method for the hydrometallurgical production of the nickel-cobalt-manganese new energy raw material from laterite nickel ore according to claim 1, **characterized in that** in the mixed nickel-cobalt-manganese hydroxide, the Ni content is 35-45%, the Co content is 2.5-5.0%, and the Mn content is 6-12%.

19. The green method for the hydrometallurgical production of the nickel-cobalt-manganese new energy raw material from laterite nickel ore according to claim 1, **characterized in that** the tail-stage liquid phase after the multistage iron-aluminum-chromium removal is subjected to liquid phase extraction, and a raffinate obtained is subjected to multistage precipitation to recover valuable metals such as copper, zinc, and scandium.

20. The green method for the hydrometallurgical production of the nickel-cobalt-manganese new energy raw material from laterite nickel ore according to claim 1, **characterized in that** the mixed nickel-cobalt-manganese salt is a mixed salt of battery-grade nickel sulfate, cobalt sulfate, and manganese sulfate; the nickel salt is battery-grade nickel sulfate; the cobalt salt is battery-grade cobalt sulfate; and the manganese salt is battery-grade manganese sulfate.

21. The green method for the hydrometallurgical production of the nickel-cobalt-manganese new energy raw material from laterite nickel ore according to claim 1, **characterized in that** the nickel-cobalt-manganese ternary precursor has a chemical formula of NiₓCo_{y}Mn_{z}(OH)₂, where 0<x<1, 0<y<1, 0≤z<1, and x + y + z = 1; and
the nickel-cobalt-manganese ternary precursor satisfies the preparation requirements of a cathode material for a ternary power battery including a common ternary material, a high-voltage ternary material, a high nickel/ultra-high nickel ternary material, and a lithium-rich manganese-based material.

22. The green method for the hydrometallurgical production of the nickel-cobalt-manganese new energy raw material from laterite nickel ore according to claim 1, **characterized in that** the nickel-cobalt-manganese ternary precursor has a D50 of 2-20 µm, a tap density of 0.5-2.6 g/cm³, and a BET surface area of 2-50 m²/g.

23. The green method for the hydrometallurgical production of the nickel-cobalt-manganese new energy raw material from laterite nickel ore according to claim 1, **characterized in that** the cross-sectional structure of the nickel-cobalt-manganese ternary precursor comprises a radial arrangement or a non-radial arrangement;
the pore distribution state of the nickel-cobalt-manganese ternary precursor is any one of pore uniform distribution, pore internal concentrated distribution, pore external concentrated distribution, and pore multi-layer annular distribution; and
the nickel-cobalt-manganese element distribution state of the nickel-cobalt-manganese ternary precursor is any one of a uniform distribution, a double-layer or multi-layer core-shell distribution, a gradient distribution, a full concentration gradient distribution, and a double-gradient distribution.

24. The green method for the hydrometallurgical production of the nickel-cobalt-manganese new energy raw material from laterite nickel ore according to claim 1, **characterized in that** the process conditions for the controlled precipitation reaction comprise: controlling the pH to be 9-13, the concentration of the complexing agent to be 0.1-20 g/L, the temperature to be 40-80°C, and the stirring speed of a reactor to be 50-500 rpm;
the precipitant is one or a mixture of potassium hydroxide, sodium hydroxide, or sodium carbonate; and
the complexing agent is one or a mixture of ammonia, ammonium carbonate, citric acid, oxalic acid, acetic acid, and EDTA.

25. The green method for the hydrometallurgical production of the nickel-cobalt-manganese new energy raw material from laterite nickel ore according to claim 24, **characterized in that** the controlled precipitation reaction is further preceded by a doping step, specifically by formulating a soluble salt of a doping element into a doping element solution of 0.01-0.1mol/L for doping; and
the doping element is one or more of aluminum, magnesium, zirconium, titanium, yttrium, tungsten, molybdenum, calcium, niobium, lanthanum, indium, strontium, tantalum, iron, copper, zinc, boron, fluorine, and vanadium.

26. The green method for the hydrometallurgical production of the nickel-cobalt-manganese new energy raw material from laterite nickel ore according to claim 25, **characterized in that** the controlled precipitation reaction and doping are further preceded by a coating step, specifically, by formulating a soluble salt of a coating element into a coating element solution of 0.1-1 mol/L for coating; and
the coating element is one or more of cobalt, manganese, aluminum, magnesium, zirconium, titanium, yttrium, tungsten, molybdenum, calcium, niobium, lanthanum, indium, strontium, tantalum, iron, copper, and zinc.

27. The green method for the hydrometallurgical production of the nickel-cobalt-manganese new energy raw material from laterite nickel ore according to claim 24, **characterized in that** the stirring means of the reactor employs any one or more of a combination of straight-blade open turbine impellers, pitched-blade open turbine impellers, and pitched-blade disc turbine impellers.

28. The green method for the hydrometallurgical production of the nickel-cobalt-manganese new energy raw material from laterite nickel ore according to claim 1, **characterized in that** the cathode material for the ternary power battery is prepared from the nickel-cobalt-manganese ternary precursor and a lithium-containing raw material, by the following specific step:
according to the content ratio of nickel-cobalt-manganese in the cathode material for the ternary power battery, reacting the nickel-cobalt-manganese ternary precursor with lithium carbonate or lithium hydroxide at a high temperature to synthesize the cathode material for the ternary power battery.
